# EUROPÄISCHE PATENTANMELDUNG

(11) **EP 2 109 041 A1**
(43) Veröffentlichungstag der Anmeldung: **14.10.2009**
(21) Anmeldenummer: 09100183.4
(22) Anmeldetag: 13.03.2009
(51) Int. Cl.: G06F 9/445

(54) **Verfahren zur automatischen Aktualisierung von Software**

(30) Priorität: 09.04.2008 DE 102008001080
(71) Anmelder: ROBERT BOSCH GMBH, 70442 Stuttgart (DE)
(72) Erfinder: Friese, Michael, 31171, Nordstemmen (DE); Schappert, Juergen, 31089, Duingen (DE)

(57) **Zusammenfassung**

Verfahren zur automatischen Aktualisierung von Software für mindestens ein dezentral angeordnetes Gerät (2) durch eine zentrale Einrichtung (6), wobei vor der Aktualisierung eine Kommunikation zwischen der zentralen Einrichtung (6) und dem mindestens einen dezentral angeordneten Gerät (2) erfolgt, wobei ermittelt wird, welche Software das mindestens eine dezentral angeordnete Gerät (2) benötigt, so dass dem mindestens einen dezentral angeordneten Gerät (2) nur die von ihm benötigte Software bereitgestellt wird.

## Beschreibung

Die Erfindung betrifft ein Verfahren zur automatischen Aktualisierung von Software, eine zentrale Einrichtung zur automatischen Aktualisierung von Software, ein Computerprogramm und ein Computerprogrammprodukt.

### Stand der Technik

Die Anzahl von Telematikgeräten für den Automobilbereich, LKW- oder Bahnbereich nimmt weltweit stetig zu. Weiterhin ändern sich die Anforderungen an diese Geräte, z. B. für Bemautung, Flottenmanagement oder Ortung, täglich. Dies stellt die Hersteller und Betreiber der Telematikeinheiten vor das Problem, die im Feld befindlichen Geräte auf einem aktuellen Stand der Software zu halten. Durch bestimmte Varianten ist üblicherweise nicht immer jede SoftwareÄnderung für alle Geräte notwendig. Allerdings nimmt die Größe bei Downloads zu übertragenden Datenmengen und deren wachsende Komplexität ständig zu. Ein Update von mehreren Geräten ist immer mit hohen Übertragungskosten und mit logistischen Problemen verbunden.

Ein Datenübertragungsverfahren ist in der Druckschrift DE 10 2005 034 047 A1 beschrieben. Hier sind erste Daten dafür vorgesehen, an einer ersten Stelle zweite Daten zu ersetzen. Außerdem wird ein Vergleich der ersten und der zweiten Daten durchgeführt, dritte Daten werden von einer zweiten Stelle zu der ersten Stelle übertragen. Die dritten Daten werden aus einem Vergleich der ersten Daten und der zweiten Daten auf einer Kodierungsebene bestimmt. Somit betrifft die Durchschrift DE 10 2005 034 047 A1 ein Softwareupdate. Ziel hierbei ist es, die übertragene Datenmenge zu reduzieren. Dies wird dadurch erreicht, dass serverseitig die aktuelle Version der Geräte-Software mit der neuen bitgenau verglichen und nur die Abweichungen zum Update der Geräte-Software an das Gerät gesendet wird. Dabei werden die Versionsnummer der Geräte-Software vom Server abgerufen, die Software selbst liegt auf dem Server, kann aber auch übermittelt werden.

### Offenbarung der Erfindung

Die Erfindung betrifft ein Verfahren zur automatischen Aktualisierung von Software für mindestens einen dezentral angeordnetes Gerät durch eine zentrale Einrichtung. Bei diesem Verfahren ist vorgesehen, dass vor der eigentlichen Aktualisierung eine Kommunikation zwischen der zentralen Einrichtung und dem mindestens einen dezentral angeordneten Gerät erfolgt. Dabei wird von der zentralen Einrichtung ermittelt und somit festgestellt, welche Software das mindestens eine dezentral angeordnete Gerät benötigt, so dass dem mindestens einen dezentral angeordneten Gerät nur die von ihm benötigte Software bereitgestellt wird.

Das Verfahren kann entweder ausgehend von der zentralen Einrichtung oder ausgehend von dem mindestens ein dezentral angeordneten Gerät, das üblicherweise beweglich ist, initiiert werden. Dabei verfügt üblicherweise die zentrale Einrichtung über einen umfangreichen Bestand an Software, der seitens eines Betreibers der zentralen Einrichtung ergänzt werden kann. Falls sich herausstellt, dass die zentrale Einrichtung neue Software erhält, die u. a. für das mindestens ein dezentral angeordnete Gerät vorgesehen sein kann, so wird das Verfahren ausgehend von der zentralen Einrichtung gestartet, wobei die zentrale Einrichtung mit dem mindestens einen dezentral angeordneten Gerät Kontakt aufnimmt und die im Rahmen des erfindungsgemäßen Verfahrens vorgesehene Kommunikation startet.

Alternativ oder ergänzend kann jedoch auch vorgesehen sein, dass das Verfahren ausgehend von dem mindestens einen dezentral angeordneten Gerät gestartet wird. Dies kann eintreten, falls das mindestens eine dezentral angeordnete Gerät während seines Betriebs einen Fehler selbsttätig bemerkt oder falls ein Nutzer dieses Geräts einen derartigen Fehler bemerkt.
Dann kann das mindestens eine dezentral angeordnete Gerät automatisch oder bedarfsweise durch seinen Nutzer bedient das Verfahren starten. In diesem Fall nimmt das mindestens eine dezentral angeordnete Gerät Kontakt zu der zentralen Einrichtung auf, so dass die vorgesehene Kommunikation eingeleitet wird.

In Ausgestaltung ist vorgesehen, dass in einer Datenbank der zentralen Einrichtung Informationen über das mindestens eine dezentral angeordnete Gerät gespeichert werden, wobei diese Informationen zur Durchführung der Aktualisierung verwendet werden.

Üblicherweise ist die zentrale Einrichtung dazu ausgelegt, Aktualisierungen für eine große Anzahl dezentral angeordneter Geräte durchzuführen, die unterschiedliche Eigenschaften aufweisen und während ihres Betriebs auch unterschiedliche Funktionen durchführen können. Dies kann bedeuten, dass es unter sämtlichen Geräten einige identisch ausgebildete Geräte aber auch hochspezialisierte möglicherweise nur einmalig existierende Geräte gibt. Über diese Geräte, für die die zentrale Einrichtung Software bereitstellen kann, verfügt die zentrale Einrichtung über entsprechende Informationen. Anhand eines Identifikationscodes, der jedem dezentral angeordneten Gerät zugeordnet sein kann, kann die zentrale Einrichtung das mindestens eine dezentral angeordnete Gerät identifizieren. Somit ist zur Umsetzung des vorgesehenen Verfahrens der zentralen Einrichtung bekannt, welche Software welches Gerät grundsätzlich aufweist oder potentiell benötigen kann.

Falls für das mindestens eine dezentral angeordnete Gerät mehrere Aktualisierungen nacheinander vorgenommen werden, ist der zentralen Einrichtung üblicherweise bekannt, auf welchem aktuellen Stand sich die Software eines jeweiligen Geräts befindet. Falls zur Aktualisierung von Software für das mindestens eine dezentral angeordnete Gerät mehrere zentrale Einrichtungen vorhanden sind, die die Aktualisierungen für das mindestens eine dezentral angeordnete Gerät ggf. abwechselnd durchführen, können diese zentralen Einrichtungen sich über ein aktuellen Stand der Software des mindestens einen dezentral angeordneten Geräts gegenseitig informieren. Falls eine zentrale Einrichtung diesbezüglich nicht auf den neuesten Stand sein sollte, kann bei Durchführung des Verfahrens während der Kommunikation diesbezüglich ermittelt werden, auf welchem Stand sich die Software des mindestens einen dezentral angeordneten Geräts befindet.

Im Rahmen des Verfahrens ist u. a. vorgesehen, dass bei Vorliegen einer neuen Version einer Software durch die zentrale Einrichtung unter Berücksichtigung der Informationen ermittelt und somit festgestellt wird, für welches mindestens eine dezentral angeordneten Gerät Bedarf an der neuen Version der Software besteht, so dass von der zentralen Einrichtung nur zu diesem mindestens ein dezentral angeordneten Gerät, für das der Bedarf besteht, ein Kontakt zur Durchführung der Kommunikation aufgenommen wird.

Das Verfahren wird demnach ausgehend von der zentralen Einrichtung nur dann gestartet, falls die neue Version der Software der zentralen Einrichtung üblicherweise von deren Betreiber übermittelt wird. Sobald die zentrale Einrichtung die neue Version der Software erhalten hat, wird für mindestens ein ausgewähltes dezentral angeordnetes Gerät, für das diese neue Version in Frage kommt, Kontakt aufgenommen und die vorgesehene Kommunikation durchgeführt.

Während der besagten Kommunikation kann durch die zentrale Einrichtung überprüft werden, in welchem Zustand sich die Software, die in dem mindestens ein dezentral angeordneten Gerät aktuell gespeichert ist, befindet. Hierbei kann ermittelt werden, auf welchem Stand sich die Software befindet, d. h. welche aktuelle Version vorhanden ist. Zudem kann auch überprüft werden, ob die in dem mindestens ein dezentral angeordneten Gerät aktuell gespeicherte Software ggf. Defekte oder Fehler aufweist, die das Gerät selbsttätigt nicht erfasst hat. Im Rahmen des Verfahrens können somit auch bezüglich fehlerhafter oder defekter Software Aktualisierungen vorgenommen werden.

In einer Variante des Verfahrens wird durch die zentrale Einrichtung ermittelt und somit festgestellt, welchen Teil der neuen Software das mindestens eine dezentral angeordnete Gerät benötigt. In der Regel kann grundsätzlich festgestellt werden, welche Software, wobei es sich auch um alte aber dennoch genutzte Software handeln kann, das mindestens eine dezentral angeordnete Gerät benötigt. Üblicherweise umfasst eine neue Version der Software im Vergleich zu einer Vorgängerversion nur Änderungen, die eine Spezialisierung der Software betreffen um somit einen Betrieb des mindestens ein dezentral angeordneten Geräts verbessern können. Ein Grundbestand der Software ist von Versionsänderungen üblicherweise nicht betroffen. Doch falls Teile des Grundbestands der Software, die weitgehend versionsunabhängig sind, fehlerhaft oder defekt sein sollten, kann im Rahmen des Verfahrens auch ermittelt werden, dass ein derartiger Teil der Software ggf. zu aktualisieren ist.

Nachdem ermittelt ist, welchen Teil der Software das mindestens eine dezentral angeordnete Gerät benötigt, wird durch die zentrale Einrichtung aus einem gesamten Softwarebestand, der in der zentralen Einrichtung vorhanden ist, nur dieser Teil der Software und insbesondere der neuen Version der Software extrahiert und nur dieser benötigte Teil der Software dem mindestens einen dezentral angeordneten Gerät bereitgestellt. Durch diese Maßnahme ergibt sich, dass während des Verfahrens dem dezentral angeordneten Gerät nur eine minimale Menge an Daten bereitgestellt werden muss.

In Ausgestaltung des Verfahrens wird die von dem mindestens einen dezentral angeordneten Gerät benötigte Software von der zentralen Einrichtung an das mindestens eine dezentral angeordnete Gerät übertragen. Eine Bereitstellung bzw. Übertragung der Software kann drahtlos, typischerweise über elektromagnetische Wellen, erfolgen. Dies bietet sich an, falls zwischen der zentralen Einrichtung und dem mindestens einen dezentral angeordneten Gerät eine größere Entfernung vorhanden ist und falls das Gerät zu dem bewegbar sein sollte. Es besteht jedoch auch die Möglichkeit, dass die Software drahtgebunden übertragen wird. Dieser Fall kann eintreten, falls es möglich ist, das mindestens ein dezentral angeordnete Gerät zu der zentralen Einrichtung zu bewegen, falls bspw. größere Mengen an Daten zu übertragen sind. Üblicherweise kann vorgesehen sein, dass auch die im Rahmen des Verfahrens vorgesehene Kommunikation drahtlos erfolgt.

In einer weiteren Variante des Verfahrens wird die typischerweise drahtlose Übertragung der benötigten Software nur dann durchgeführt, wenn hierfür günstige Übertragungsbedingungen vorhanden und/oder gegeben sind. Derartige Übertragungsbedingungen können von einer Entfernung zwischen der zentralen Einrichtung und dem mindestens einen dezentral angeordneten Gerät, der Witterung aber von einem Tageszeitpunkt abhängen. Im Rahmen der vorgesehenen Kommunikation kann regelmäßig festgestellt werden, ob die Übertragungsbedingungen hinreichend günstig sind, so dass die Übertragung der Software nur dann durchgeführt wird, wenn eine vollständige fehlerfreie Übertragung der Software möglich ist.

Das beschriebene Verfahren kann in einer Anwendung für ein Gerät, bspw. ein Steuergerät in einem Fahrzeug, bspw. Landfahrzeug, üblicherweise Straßenfahrzeug, durchgeführt werden.

Die Erfindung betrifft weiterhin eine zentrale Einrichtung zur automatischen Aktualisierung von Software für mindestens ein dezentral angeordnetes Gerät. Diese zentrale Einrichtung ist dazu ausgebildet, vor der Aktualisierung eine Kommunikation mit dem mindestens einen dezentral angeordnetem Gerät durchzuführen und dabei zu ermitteln bzw. festzustellen, welche Software das mindestens das eine dezentral angeordnete Gerät benötigt, so dass die zentrale Einrichtung für mindestens ein dezentral angeordnetes Gerät nur die von ihm benötigte Software bereitstellt.

Die zentrale Einrichtung kann als Komponenten eine Datenbank, eine Recheneinheit, bspw. einen Server, und mindestens eine Übertragungseinrichtung, aufweisen. Diese Übertragungseinrichtung ist dazu ausgebildet, Informationen, Daten, bspw. Software und dgl. mit dem mindestens einen dezentral angeordneten Gerät auszutauschen, so dass mittels dieser Übertragungseinrichtung u. a. die Kommunikation zwischen der zentralen Einrichtung und dem mindestens einen dezentral angeordneten Gerät ermöglicht sowie die benötigte Software an das mindestens eine dezentral angeordneten Gerät übermittelt werden kann.

Die beschriebene zentrale Einrichtung ist dazu ausgebildet, sämtliche Schritte des vorgestellten Verfahrens durchzuführen. Dabei können einzelne Schritte dieses Verfahrens auch von einzelnen Komponenten der zentralen Einrichtung durchgeführt werden. Weiterhin können Funktionen der zentralen Einrichtung oder Funktionen von einzelnen Komponenten der zentralen Einrichtung als Schritte des Verfahrens umgesetzt werden.

Die Erfindung betrifft weiterhin ein Computerprogramm mit Programmcodemitteln, um alle Schritte eines beschriebenen Verfahrens durchzuführen, wenn das Computerprogramm auf einem Computer oder einer entsprechenden Recheneinheit, insbesondere in einer beschriebenen zentralen Einrichtung, ausgeführt wird.

Das erfindungsgemäße Computerprogrammprodukt mit Programmcodemitteln, die auf einem computerlesbaren Datenträger gespeichert sind, ist zum Durchführen aller Schritte eines beschriebenen Verfahrens ausgebildet, wenn das Computerprogramm auf einem Computer oder einer entsprechenden Recheneinheit, insbesondere in einer erfindungsgemäßen zentralen Einrichtung, ausgeführt wird.

Die Erfindung betrifft somit u. a. ein Verfahren für einen automatisierten Software-Update von Geräten, die als Telematikeinheiten ausgebildet sein können, mit der zentralen Einrichtung. Dabei kann ein Automatismus vorgesehen sein, der in der zentrale Einrichtung vorhanden ist und entscheidet, welche Geräte einen Update brauchen und welche nicht.

In Ausgestaltung der Erfindung wird die Aktualisierung bzw. der Software-Update über die Einrichtung, bspw. eine sog. Telematikzentrale, automatisiert durchgeführt. In dieser Zentrale liegen alle relevanten Informationen über jedes Gerät vor. Durch eine Auswertung der vorliegenden Daten kann die Notwendigkeit, die Art, der Zeitpunkt und der Umfang eines Updates für ein Gerät, beispielsweise einem Telematikgerät in einem Fahrzeug, geprüft werden und wenn notwendig, nur Fragmente und somit Teile der neuen Version der Software übertragen werden.

In einer Variante des Verfahrens ist vorgesehen, dass alle Geräte in der zentralen Einrichtung angemeldet werden müssen. Hierbei werden die Eigenschaften des Geräts, z. B. eine Featureliste, eine angeschlossene Sensorik und ein daraus resultierender notwendiger Funktionsumfang, mögliche Updatekanäle, Update-Modalitäten, und die aktuelle Software-Version bzw. die Versionen der Einzelkomponenten der Software in der Datenbank der zentralen Einrichtung gespeichert. Üblicherweise kann ein Fahrzeug aus einer Fahrzeugflotte mehrere Geräte aufweisen, die miteinander Wechselwirken und dabei Daten und Informationen austauschen. Somit kann eine Aktualisierung für alle Geräte eines Fahrzeugs erfolgen.

Sind Änderungen an einer Software-Komponente vorgesehen, so wird diese zunächst nur in der zentrale Einrichtung eingestellt. Die Telematikzentrale bzw. zentrale Einrichtung überprüft nun eigenständig die in der Datenbank befindlichen Fahrzeuge hinsichtlich der Notwendigkeit eines Updates. Dies kann nach unterschiedlichen Kriterien erfolgen. Somit kann für eine SoftwareÄnderung unter Bereitstellung neuer Software geprüft werden, welche Funktionen sich geändert haben und dies mit denen in der Datenbank befindlichen Fahrzeuge abgleichen, wobei überprüft wird, welche Fahrzeuge diese Funktionen benutzen.

Einem ersten Kriterium zufolge werden nur die Fahrzeuge ausgewählt, deren bekannte Eigenschaften von der Softwareänderung betroffen sind. Dabei werden die betroffenen Fahrzeuge darüber informiert, dass sie sich für einen Software-Update bei der zentrale Einrichtung zu melden haben.

Zusätzlich können die Update-Modalitäten geprüft werden. Updates können kostenpflichtig sein, somit kann die Aktualisierung ggf. erst nach Erhalt einer Gegenleistung freigeschaltet werden. Es können auch kostenlose Updates gegeben sein.

Der zentralen Einrichtung liegen durch die Kommunikation mit den Komponenten oder Einheiten eines Geräts auch Informationen über dessen Fehlerspeicher vor. Somit ist es möglich, Updates erst zuzulassen, wenn die entsprechende Komponente Fehler aufweist.

Außerdem können zu jedem Gerät spezielle Zeitfenster bzw. Timeslots hinterlegt werden, in denen Aktualisierungen und somit Updates zulässig sind. Das kann bei bestimmten Funktionen eine Rolle spielen, die durch den Updatevorgang beeinträchtigt werden können. Bei tageszeitabhängigen Tarifen könnte man somit auch eine kostenoptimierte Übertragung sicherstellen.

Da der zentralen Einrichtung üblicherweise die aktuelle Position eines Geräts, bspw. einer Telematikeinheit, vorliegt, kann der Update auch auf bestimmte Regionen beschränkt werden. Dadurch können teuere Updates über paketvermittelte Datenübertragung bspw. GSM (Global System for Mobile Communication) im Roamingfall, also beim Wechsel zwischen zwei Mobilfunknetzen, vermieden werden.

Des weiteren können bestimmte Updatekanäle bevorzugt werden. Ein Update über einen paketorientierten Funkdienst GPRS (General Packet Radio Service) kann günstiger sein als ein Update über einen leistungsvermittelten asynchronen Datenübertragungsdienst, bspw. BS26 (GSM Data-call). Für dringende Updates können alle Kanäle genutzt werden.

Das für die Übertragung eingesetzte Medium ist nicht fest vorgegeben. Es kann zum Beispiel auf Basis von GSM (mit SMS, GPRS und Data-call), als auch auf Basis W-Lan oder Bluetooth funktionieren.

Die zentrale Einrichtung kündigt dem Gerät den Update und ggf. auch die Modalitäten hierfür, z. B. Kanal, Position, Zeitpunkt, usw., an. Wenn sich das Gerät bei der zentralen Einrichtung für die Updatebereitschaft meldet, erfolgt dies mit aktuellen Informationen des Geräts, z. B. der aktuellen Version, Informationen aus dem Fehlerspeicher, usw. Durch diese beschriebenen Maßnahmen können günstige Übertragungsbedingungen ermittelt werden.

Für den Updatevorgang kann die zentrale Einrichtung durch einen Vergleich mit der auf dem Gerät befindlichen Software ein sog. Deltafile übertragen. Existiert dieses Deltafile noch nicht, kann es online durch die zentrale Einrichtung erstellt und für gleichwertige Updates wiederverwendet werden. Durch zusätzliche Komprimierung kann zusätzlich ein Minimum an Übertragungsvolumen erreicht werden.

Wenn sich ein Gerät in der zentrale Einrichtung für einen Update meldet, erfolgt dies mit der aktuell im Gerät befindlichen Software-Version. Die Zentrale kann nun byteweise die Differenz zwischen der neuen und der alten Version und somit das Deltafile ermitteln um somit ein Minimum an Übertragungsvolumen erreichen. Das Deltafile umfasst demnach nur den von dem Gerät benötigten Teil der Software. Zusätzlich kann das erzeugte Deltafile noch über einen Algorithmus komprimiert werden. Die Erstellung eines Differenz-Files, d. h. Deltafiles, kann online erfolgen, während das Gerät auf den Update wartet, und ist nur einmal notwenig. Geräte, die sich mit der gleichen Basisversion melden, können mit dem gleichen Deltafile upgedated werden.

Die zentrale Einrichtung registriert den Fortschritt des Updates und kann nach Unterbrechungen den Update auch auf anderen Kanälen fortführen. Nach einer Unterbrechung wird in der Regel nur noch die Restmenge der Software übertragen.

Das oben beschriebene Verfahren ist nicht auf Telematikgeräte beschränkt und kann bei Geräten oder Endgeräten jeglicher Art angewendet werden. In Ausgestaltung kann auch ein Fahrzeug, das mindestens ein beschriebenes Gerät aufweist, als ein Gerät, das wiederum dieses mindestens eine Gerät umfasst, definiert sein.

Bei einer weiteren Ausgestaltung der Erfindung liegt serverseitig die Gerätekonfiguration, bspw. als sog. Versionsnummer, durch die Informationen über das Gerät bestimmt werden können, vor. Der Server der zentralen Einrichtung kann die Geräte automatisch identifizieren, die einen Update brauchen.

Weitere Vorteile und Ausgestaltungen der Erfindung ergeben sich aus der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

### Kurze Beschreibung der Zeichnungen

- Figur 1: zeigt in schematischer Darstellung eine Anordnung mit einer Ausführungsform einer erfindungsgemäßen zentralen Einrichtung.
- Figur 2: zeigt ein Diagramm zur Bereitstellung eines Deltafiles im Rahmen einer Ausführungsform der Erfindung.

### Ausführungsformen der Erfindung

Die Erfindung ist anhand von Ausführungsformen in den Zeichnungen schematisch dargestellt und wird im folgenden unter Bezugnahme auf die Zeichnungen ausführlich beschrieben.

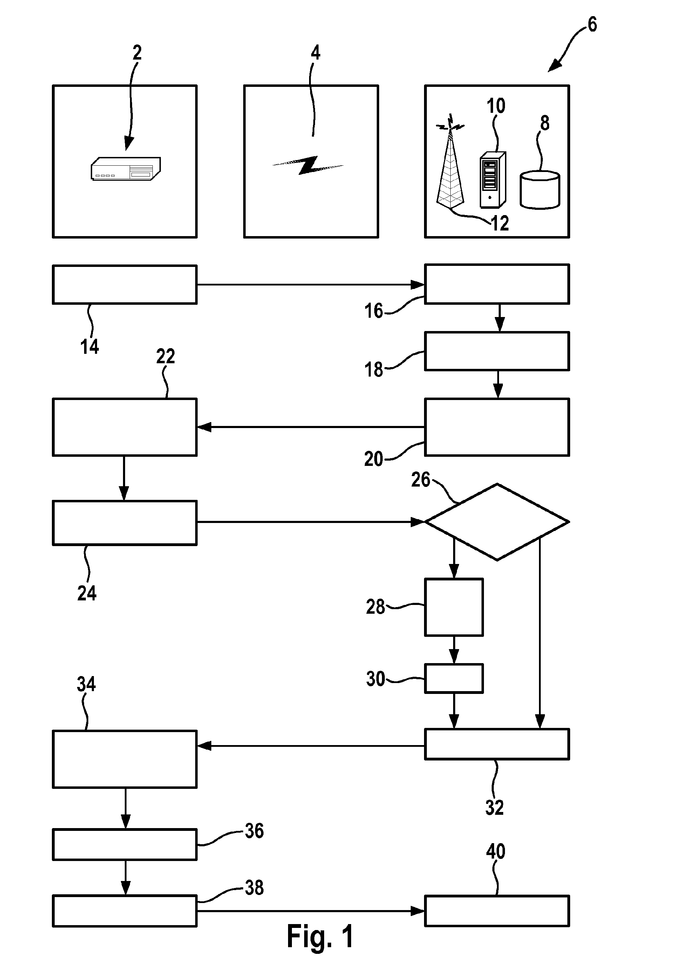

Die in Figur 1 schematisch dargestellte Anordnung umfasst eine Anzahl von dezentral angeordneten Geräten 2, die als Telematikeinheiten ausgebildet sind, allerdings ist in Figur 1 nur ein derartiges Gerät 2 dargestellt. Die Anordnung umfasst zudem ein Übertragungsmedium 4 zur Bereitstellung einer drahtlosen Kommunikation, wobei eine derartige Kommunikation bspw. über GPRS, SMS, Data-call, W-Lan, und dergleichen erfolgen kann. Die Anordnung aus Figur 1 zeigt weiterhin eine schematische Darstellung einer Ausführungsform einer erfindungsgemäßen zentralen Einrichtung 6, die hier als Telematikzentrale ausgebildet ist. Diese Einrichtung 6 umfasst eine Datenbank 8, eine Recheneinheit 10 sowie eine Funkantenne 12.

Im Rahmen einer Ausführungsform des erfindungsgemäßen Verfahrens ist vorgesehen, dass zwischen der zentralen Einrichtung 6 und dem Gerät 2 eine Kommunikation erfolgt, die u. a. eine Übertragung von Software zwischen der zentralen Einrichtung 6 und dem Gerät 2 umfassen kann. Das Gerät 2 kann weiterhin eine nicht weiter dargestellte Antenne umfassen. Bei Durchführung der Kommunikation zwischen der zentralen Einrichtung 6 und dem Gerät 2 werden Daten und Informationen, über die Antenne des Geräts 2 und die Antenne 12 der Einrichtung 6 vermittelt, über das Übertragungsmedium 4 ausgetauscht.

In einer Ausführungsform des Verfahrens wird eine automatische Aktualisierung und somit ein Update von Software für das Gerät 2 durch die zentrale Einrichtung 6 vorgenommen. Während und/oder vor der Aktualisierung erfolgt die Kommunikation zwischen der zentralen Einrichtung 6 und dem Gerät 2. Hierbei wird ermittelt, welche Software, unabhängig davon ob es sich nun um alte oder neue Software handelt, das Gerät 2 benötigt. Somit wird im Rahmen des Verfahrens dem Gerät 2 von der Einrichtung 6 die von ihm benötigte Software bereitgestellt.

Während des Verfahrens kann zunächst eine Anmeldung des Geräts 2 von der zentralen Einrichtung 6 erfolgen. Alternativ oder ergänzend kann auch vorgesehen sein, dass der zentralen Einrichtung 6 eine neue Version einer Software übermittelt wird, die ggf. an das Gerät 2 weiterzuleiten ist. Im Rahmen der Kommunikation, die üblicherweise vor der eigentlichen Aktualisierung vorgesehen ist, erfolgt eine Übertragung 14 der Geräteparameter, die bspw. eine Sensorik des Geräts 2 betreffen und der aktuell vorhandenen Version der Software auf dem Gerät 2 zu der zentralen Einrichtung 6. Nach Empfang dieser Informationen erfolgt eine Speicherung 16 der damit verbundenen Daten in der Datenbank 8.

Nach dieser Kommunikation erfolgt die eigentliche Aktualisierung der Software, wobei dem Gerät 2 neue Software zur Verfügung gestellt wird. Dies bedeutet, dass die zentrale Einrichtung 6 über die Datenbank 8 eine Prüfung 18 durchführt, bei der ermittelt und somit entschieden wird, für welches Gerät 2 die Aktualisierung und somit der Update notwenig ist. Danach erfolgt ein Aufruf 20 an alle Geräte 2, die den Update aufgrund der in der Datenbank 8 gespeicherten Informationen erhalten sollen, so dass die Geräte 2 über eine Botschaft bzw. Message darüber informiert werden, dass ein Download der Software beginnt.

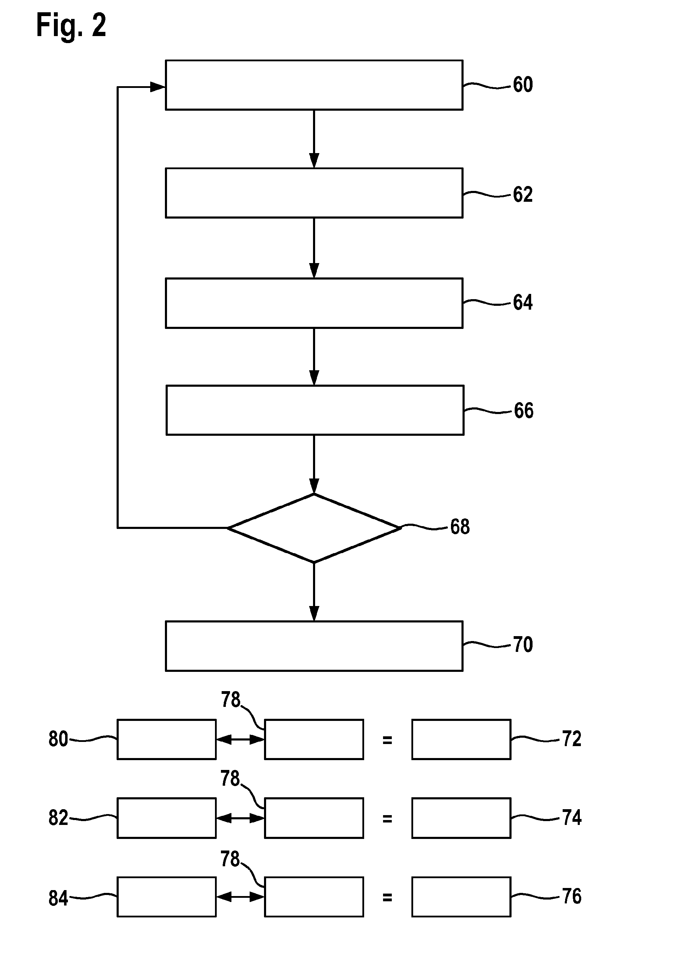

Danach erfolgt ein Wechsel 22 der aufgerufenen Geräte 2 in einem Betriebsmodus in einen Software-Update-Status. Sobald sich ein Gerät 2 in dem Software-Update-Status befindet, erfolgt eine Benachrichtigung 24 der Einrichtung 6, wobei das Gerät 2 der Einrichtung 6 die Botschaft "bereit zum Update" (ready for update) übermittelt. Weiterhin überträgt das Gerät 2 der Einrichtung 6 eine Information über einen aktuellen Stand der Software des Geräts 2 und somit die aktuelle Software-Version. Nach Erhalt dieser Übertragung 26 führt üblicherweise die Recheneinheit 10 der Einrichtung 6 eine Prüfung 36 darüber durch, ob das anhand der nachfolgenden Figur 2 näher beschriebene Deltafile für die aktuell in dem Gerät 2 vorhandene Software, insbesondere die aktuelle Software-Version, des Geräts 2 schon vorhanden ist.

Ist dies nicht der Fall, erfolgt seitens der Einrichtung 6 eine Bereitstellung 28 des Deltafiles für die Software des Geräts 2, wobei das Deltafile eine Differenz der aktuellen Software des Geräts 2 und der neuen Version der Software, die für das Gerät 2 vorgesehen ist, umfasst. Nachfolgend wird eine Komprimierung 30 des Deltafiles vorgenommen. Alternativ kann die Überprüfung 26 ergeben, dass das für das Gerät 2 vorgesehene Deltafile bereits vorhanden ist. Unabhängig davon ob das Deltafile bereits vorhanden war oder ob hierfür erst die Bereitstellung 28 durchgeführt wurde, erfolgt eine Übertragung 32 des Deltafiles an das Gerät 2.

Sobald das Gerät 2 das Deltafile erhalten hat, erfolgt ein Entpacken 34 dieses Deltafiles und ein Erstellen einer neuen Version der Software für das Gerät 2 durch einen Vergleich zwischen der bereits aktuell vorhandenen Version und dem seitens der Einrichtung 6 bereitgestellten Deltafile. Danach wird durch das Gerät 2 ein Prüfen 36 und Abspeichern (Flashen) der neuen Version der Software in dem Steuergerät 2 durchgeführt. Darauf folgt eine Meldung 38 des Geräts 2 an die Einrichtung 6 darüber, dass die Aktualisierung und somit der Update erfolgreich war. Auf Grundlage dieser Meldung 38 führt die Einrichtung 6 einen Update 40 der aktuellen Daten, die aktuelle Informationen über den aktuellen Stand der Software in dem Gerät 2 umfassen, in der Datenbank 8 durch.

Das Diagramm aus Figur 2 zeigt einzelne Schritte einer Vorgehensweise, die im Rahmen einer Ausführungsform des erfindungsgemäßen Verfahrens zur Bereitstellung des Deltafiles vorgesehen sind. Diese Schritte umfassen einen Ablauf in einer Ausführungsform einer erfindungsgemäßen zentralen Einrichtung.

Zunächst erfolgt ein Start 60 ab einer Adresse (0X00). Danach ist ein byteweiser Vergleich 62 zwischen der alten und der neuen Version der Software des Geräts vorgesehen. Währendessen werden ein Bytezähler und eine Adresse inkrementiert, bis die Bytes ungleich sind. Darauf folgt eine Gruppierung 64 der Startadresse und der Anzahl der gleichen Bytes in das zu erstellende Deltafile. Bei einer Differenzbildung 66 werden ungleiche Bytes, die demnach die Differenz zwischen der alten und der neuen Version der Software umfassen, direkt in das Deltafile geschrieben.

Danach erfolgt eine Prüfung 68 darüber, ob der Vergleich zwischen der alten und der neuen Version der Software vollständig abgeschlossen ist, was in der vorliegenden Ausführungsform bedeutet, dass überprüft wird, ob das Ende des Deltafiles erreicht ist, falls dies nicht der Fall ist, wird die Bereitstellung des Deltafiles beginnend bei dem Start 60 unter Prüfung der Bytes zwischen der alten und der neuen Version der Software fortgeführt. Falls das Deltafile jedoch komplett bereitgestellt ist, erfolgt eine Komprimierung 70 des erzeugten Deltafiles über einen Algorithmus.

Figur 2 zeigt weiterhin drei Beispiele für Deltafiles 72, 74, 76, die im Rahmen des Verfahrens bereitgestellt werden. In allen drei Beispielen ist eine neue Software-Version "V X.Y." 78 vorgegeben. Im ersten Beispiel ist die alte Software-Version "V X.A" 80 daraus ergibt sich nach dem vorgenommenen Vergleich 62 ein erstes Deltafile "X.Y_X.A." 72. Im zweiten Beispiel liegt eine alte Software-Version "V X.B" 82 vor. Nach Vergleich mit der neuen Software-Version "V X.Y".78 wird im Rahmen des Verfahrens ein zweites Deltafile "X.Y_X.B" 74 durch byteweisen Vergleich bereitgestellt. In dem dritten Beispiel ist vorgesehen, dass eine alte Software-Version "V X.C" 84 gegeben ist. Daraus resultiert nach Durchführung des Verfahrens ein drittes Deltafile "X.Y_X.C "76.

## Patentansprüche

1. Verfahren zur automatischen Aktualisierung von Software für mindestens ein dezentral angeordnetes Gerät (2) durch eine zentrale Einrichtung (6), wobei vor der Aktualisierung eine Kommunikation zwischen der zentralen Einrichtung (6) und dem mindestens einen dezentral angeordneten Gerät (2) erfolgt, wobei ermittelt wird, welche Software das mindestens eine dezentral angeordnete Gerät (2) benötigt, so dass dem mindestens einen dezentral angeordneten Gerät (2) nur die von ihm benötigte Software bereitgestellt wird.

2. Verfahren nach Anspruch 1, bei dem in einer Datenbank (8) der zentralen Einrichtung (6) Informationen über das mindestens eine dezentral angeordnete Gerät (2) gespeichert werden, wobei diese Informationen zur Durchführung der Aktualisierung verwendet werden.

3. Verfahren nach Anspruch 2, bei dem bei Vorliegen einer neuen Version (78) einer Software durch die zentrale Einrichtung (6) unter Berücksichtigung der Informationen ermittelt wird, für welches mindestens eine dezentral angeordnete Gerät (2) Bedarf an der neuen Version (78) der Software besteht, so dass von der zentralen Einrichtung (6) zu diesem mindestens einen dezentral angeordneten Gerät (2), für das der Bedarf besteht, ein Kontakt zur Durchführung der Kommunikation aufgenommen wird.

4. Verfahren nach einem der voranstehenden Ansprüche, bei dem durch die zentrale Einrichtung (6) während der Kommunikation überprüft wird, in welchem Zustand sich Software, die in dem mindestens einen dezentral angeordneten Gerät (2) aktuell gespeichert ist, befindet.

5. Verfahren nach Anspruch 3 bis 4, bei dem durch die zentrale Einrichtung (6) ermittelt wird, welchen Teil der neuen Version (78) der Software das mindestens eine dezentral angeordnete Gerät (2) benötigt, so dass durch die zentrale Einrichtung (6) nur dieser Teil aus der neuen Version (78) der Software extrahiert und nur dieser benötigte Teil der Software dem mindestens einen dezentral angeordneten Gerät (2) bereitgestellt wird.

6. Verfahren nach einem der voranstehenden Ansprüche, bei dem die von dem mindestens einen dezentral angeordneten Gerät (2) benötigte Software von der zentralen Einrichtung (6) an das mindestens eine dezentral angeordnete Gerät (2) übertragen wird.

7. Verfahren nach Anspruch 6, bei dem eine Übertragung der benötigten Software nur dann durchgeführt wird, wenn hierfür günstige Übertragungsbedingungen vorhanden sind.

8. Verfahren nach einem der voranstehenden Ansprüche, bei dem die Software drahtlos bereitgestellt wird.

9. Verfahren nach einem der voranstehenden Ansprüche, das für ein Gerät (2) in einem Fahrzeug durchgeführt wird.

10. Zentrale Einrichtung zur automatischen Aktualisierung von Software für mindestens ein dezentral angeordnetes Gerät (2), die dazu ausgebildet ist, vor der Aktualisierung eine Kommunikation mit dem mindestens einen dezentral angeordneten Gerät (2) durchzuführen, und zu ermitteln, welche Software das mindestens eine dezentral angeordnete Gerät (2) benötigt, so dass die zentrale Einrichtung (6) dem mindestens einen dezentral angeordneten Gerät (2) nur die von ihm benötigte Software bereitstellt.

11. Computerprogramm mit Programmcodemitteln, um alle Schritte eines Verfahrens nach einem der Ansprüche 1 bis 9 durchzuführen, wenn das Computerprogramm auf einem Computer oder einer entsprechenden Recheneinheit (10), insbesondere in einer zentralen Einrichtung (6) nach Anspruch 10, ausgeführt wird.

12. Computerprogrammprodukt mit Programmcodemitteln, die auf einem computerlesbaren Datenträger gespeichert sind, um alle Schritte eines Verfahrens nach einem der Ansprüche 1 bis 9 durchzuführen, wenn das Computerprogramm auf einem Computer oder einer entsprechenden Recheneinheit (10), insbesondere in einer zentralen Einrichtung (6) nach Anspruch 10, ausgeführt wird.
